# EUROPEAN PATENT APPLICATION

(11) **EP 2 801 809 A1**
(43) Date of publication of application: **12.11.2014**
(21) Application number: 13180793.5
(22) Date of filing: 18.08.2013
(51) Int. Cl.: G01M 5/00

(54) **Structural health monitoring using hollow cavity structure**

(30) Priority: 06.05.2013 US 201361819830 P
(71) Applicant: VRIJE UNIVERSITEIT BRUSSEL, 1050 Brussel (BE)
(72) Inventor: De Baere, Dieter, 1770 Liedekerke (BE)
(74) Representative: Wauters, Davy Erik Angelo

(57) **Abstract**

A system is described for performing structural health monitoring of an object (102) under study. The system comprises a hollow cavity structure (101) comprising one or more cavities obtained using additive manufacturing. The cavity structure (101) is sealable from its environment and forms an integral part of the object (102) under study. The cavity structure furthermore is connectable to a pressure sensor (103) for sensing a pressure in the cavity structure (101).

## Description

### Field of the invention

The invention relates to the field of structural health monitoring. More specifically it relates to robust systems and methods for reliably monitoring of the structural health of critical zones or components of an object under study.

### Background of the invention

Structural health monitoring (SHM) is a collective term for technologies that are used to monitor the structural integrity of structures or identify structural damage by permanently attached sensors. In the past SHM techniques have been investigated for example for the aeronautical industry. This sector is eager to integrate SHM systems in their products due to the fact of a continuous search for enhancing the safety level of their products and reduction of the direct operating costs for operating an aircraft. Currently visual inspections and a large number of non-destructive evaluation techniques with a local inspection capability are available for the industry. In the last 3 decades numerous SHM techniques have been investigated with the focus on damage identification in components on a more global character. The basic scientific challenge for SHM remains to detect damage, which is a very local phenomenon by measuring global responses parameters of a structure. Next to this primary scientific challenge some other big barriers block the industry from applying SHM systems more in particular their effectiveness in practice and durability under in-service conditions.

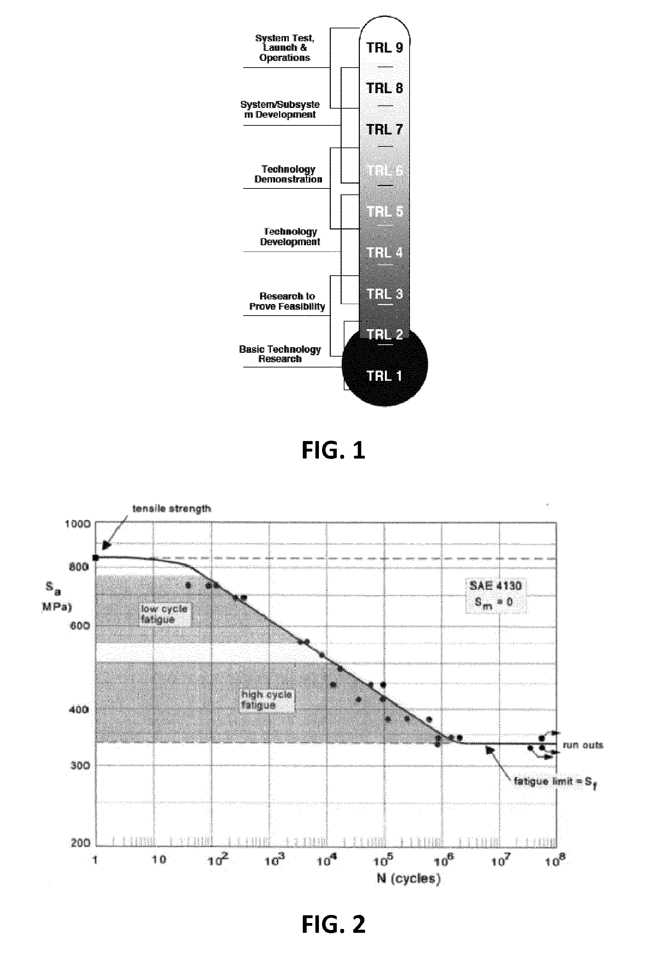

These challenges are some of the major blocking points which have prevented the introduction of SHM technologies in real life structures/applications with exception of condition monitoring of rotary machinery. The maturity of different evolving SHM systems has been expressed in technological readiness levels by the large industrial players (e.g. Airbus) and governmental research organisation (e.g. NASA). The definitions vary slightly for the different organisations but the major philosophy remains the same. An example is illustrated in FIG. 1, as described by Wilwhite A.W. et al. in Workshop Proceedings, NASA Jet Propulsion Laboratory (JPL-Publ-2004-011) (June) (2004), pp. 14-30, a detailed description of the technological readiness levels indicated being described in detail in this reference.

Fatigue is an important damage phenomenon that affects the structural integrity of a structural component/applications. Fatigue has been approached in many ways:
In the first half of 20th century, cyclic slip was considered to be essential for micro-crack initiation and it was also associated with cyclic dislocation movements. Micro-cracks usually start at the free surface of the material, also in unnotched objects under study with a nominally homogeneous stress distribution tested under cyclic tension. The restrain on cyclic slip is lower than inside the material because of the free surface at one side of the surface material. It can be concluded that fatigue crack initiation is a surface phenomenon. Fatigue life under cyclic loading consisted of two phases: crack initiation life and crack growth period until failure. The initiation period typically may start with cyclic slip, resulting in crack nucleation, which further results in micro crack growth. The first phase may cover a large part of the fatigue life under stress amplitudes just above the fatigue limit but for higher stress amplitudes the crack growth period is essential for the fatigue life. The crack growth period, which is the second phase, typically consists of macro crack growth ending in final failure. The difference between the two phases is of great importance because several surface conditions do affect the initiation period but not the crack growth period (surface roughness, surface damage, surface residual stresses, surface treatments). Corrosive environments and tribological phenomena can also affect initiation and crack growth period but in different way for the two periods. The stress concentration factor Kₜ is the important parameter for predictions on crack initiation, the stress intensity factor K is used for predictions on crack growth, while the fracture toughness K_{1c} is characteristic for the final failure.
Fatigue properties can also be described in terms of a Wöhler Curve (S-N curve). A S-N curve is derived from a number of fatigue tests at different stress levels, the fatigue life N is plotted on a logarithmic scale in the horizontal direction and the stress amplitude on a linear scale in the vertical direction. As can be seen in FIG. 2, available from J. Schijve, "Fatigue of structures and materials in the 20th century and the state of the art," International Journal of Fatigue, vol. 25, no. 8, pp. 679-702, Aug. 2003, for low stress amplitudes the curve exhibited a lower limit which implies that the failure has not occurred even after a high number of load cycles. The horizontal asymptote of the S-N curve is called the fatigue limit. At the upper side of the S-N curve, where the large stress amplitudes are, another horizontal asymptote appears. If failure did not occur in the first cycle, the fatigue life could be several hundreds of cycles. The 'low-cycle fatigue' area implies that macro plastic deformation occurs in every cycle. On the other hand, at lower stress amplitudes macro plastic deformation does not occur and the fatigue phenomenon is called as 'high-cycle fatigue'.
Besides fatigue, the structural integrity of objects can also be impacted by wear (or tribological) phenomena. These phenomena are sometimes interrelated. Wear phenomena can play an important role for structural health of objects and therefore need to be monitored.
There is still room for systems and methods for structural health monitoring of objects, whereby the structural health monitoring system is reliable and robust and is not penalizing the useful physical integrity of the object under study.

### Summary of the invention

It is an object of the present invention to provide efficient methods and systems for structural health monitoring.

It is an advantage of embodiments of the present invention that systems and methods are provided for checking fatigue initiation failure mode and/or fatigue growth mode and/or fatigue critical failure mode at component level. It is an advantage of embodiments of the present invention that systems and methods are provided which also allow the indication of wear levels. It is an advantage of embodiments of the present invention that condition based monitoring can be performed as the different levels of fatigue can be checked and/or monitored. In view thereof, embodiments of the present invention also allow good planning of maintenance, repair and overhaul tasks.

It is an advantage of embodiments of the present invention that systems and methods are provided which allow checking and/or monitoring of crack growth can be performed in situ, even during use of the objects. The latter also results in the fact that inspection and maintenance does not or does only limited result in downtime of the object or of the device the object is used in. In other words, using embodiments of the present invention, there can be a high or increased availability of structures or machines that are checked and/or monitored. Furthermore, it is an advantage of embodiments of the present invention that a highly robust solution is obtained, as the system for checking and/or monitoring can be fully integrated.

It is an advantage of embodiments of the present invention that in view of the possibility of accurate planning of maintenance and repair, in view of "online" checking and/or monitoring - i.e. checking and/or monitoring during use - and/or in view of the good accuracy for checking and/or monitoring, the direct operational cost can be limited or reduced compared to other inspection and/or monitoring techniques.

It is an advantage of embodiments of the present invention that systems and methods are provided that reduce inspection and maintenance costs. It is an advantage of embodiments of the present invention that the inspection time can be short and the inspection can be done remotely.

It is an advantage of embodiments of the present invention that systems and methods are provided that result in a high safety level for highly critical applications.

It is an advantage of embodiments of the present invention that systems and methods are provided that allow testing new mechanical structures, e.g. having a reduced weight, being made of a new material, being made using new production methods, being made according to a new design, etc. with only a limited risk as the structural integrity, wear or fatigue behaviour can be accurately and continuously monitored in operation.

It is an advantage of embodiments of the present invention that checking and monitoring can be performed by measurement of a straight forward physical quantity and allows an easy interpretation of the results with a low amount of post processing.

It is an advantage of embodiments of the present invention that one area or even more areas can be accurately monitored using a single sensor.

The above object is obtained using a method and/or system according to an embodiment of the present invention.

It is an advantage of embodiments of the current invention that the hollow structure, a structure wherein a length direction varies in at least a two dimensional or three dimensional space, can be designed such that the physical integrity of the object under study is not or only limitedly affected by the presence of the three dimensional hollow network structure. As such it is also an advantage of embodiments of the present invention that the hollow network structure does not or only slightly influences the crack initiation behavior.

It is an advantage that additive manufacturing technologies such as e.g. layer-wise laser cladding and selective laser melting etc. and hybrid technologies of additive manufacturing combined with subtractive manufacturing are enabling technologies for the current invention.

Additive manufacturing technologies such as layer-wise laser cladding and selective laser melting etc. and hybrid technologies of additive manufacturing combined with subtractive manufacturing overcome production problems.

The present invention relates to a system for performing structural health monitoring of an object under study, the system comprising a hollow cavity structure comprising one or more cavities obtained using additive manufacturing, the cavity structure, being sealable from its environment and forming an integral part of the object under study, the cavity structure being furthermore connectable to a pressure sensor for sensing at least one pressure inside the cavity structure. It is an advantage of embodiments of the present invention that structural health monitoring can be performed in an accurate manner at component level.

The hollow cavity structure may be such that at least one cavity of the hollow cavity structure can be described as a volume being defined by sweeping an area, defined by a closed two dimensional curve, along at least one path, so that the path passes perpendicularly through the plane in which the closed two dimensional curve is defined, with the path propagating in at least a two dimensional space. The path may thus remain in a plane. The path may be a center line or a center curve. The length direction of the cavity thus may extend substantially in two directions. The path may pass through the centroid of the closed two dimensional section. In some embodiments, the area can vary arbitrarily for each point of the path. In some embodiments, the area may vary in a number of points of the path, e.g. in at least one or at least two points.

The hollow cavity structure may be such that at least one cavity of the hollow cavity structure can be described as a volume being defined by sweeping an area, defined by a closed two dimensional curve, along at least one path, so that the path passes perpendicularly through the plane in which the closed two dimensional curve is defined, with the path propagating in an at least three dimensional space. The path may pass through the centroid of the closed two dimensional section. In some embodiments, the area can vary arbitrarily for each point of the path. In some embodiments, the area may vary in a number of points of the path, e.g. in at least one or at least two points.

In some embodiments, the hollow cavity structure may be a hollow cavity structure varying along a length direction thereof at least in a two dimensional way, wherein at least one cavity comprises at least two distinct positions along a length direction of said cavity a direction variation of the cavity. It is an advantage of embodiments according to the present invention that easy and accurate manufacturing of an integrated cavity structure can be obtained, resulting in an accurate cavity structure thus allowing accurate checking and/or monitoring, without influencing the object to be checked too significantly.

The hollow cavity structure may be a hollow cavity structure varying along a length direction thereof in a three dimensional way, the structure comprising a network of cavities. The hollow cavity structure may comprise at least one cavity being curved along a length direction thereof. It is an advantage of embodiments according to the present invention that a complex hollow cavity structure can be implemented, allowing to check and/or monitor fatigue at different points in the component.

The network of cavities furthermore may comprise at least one valve for isolating a part of the cavities in the hollow cavity structure. It is an advantage of embodiment according to the present invention that different locations in an object can be checked and/or monitored accurately using the same cavity structure, thus allowing accurate localization of fatigue and more efficient maintenance.

The hollow cavity structure may be filled with a fluidum at under- or overpressure. It is an advantage of embodiments of the present invention that the structural health monitoring can be performed by mere pressure sensing of a fluidum in a cavity.

The system furthermore may comprise a pressure sensor connectable to the cavity structure for sensing a pressure in the cavity structure.

The system may comprise a processing unit adapted for receiving measurement signals representative of a physical parameter of the fully integrated hollow cavity structure and for processing said measurement signals for detecting whether or not wear or cracks have occurred in the object under study. It is an advantage of embodiments of the present invention that a conventional pressure sensor can be used for assisting in structural health monitoring.

The system may comprise said processing unit, wherein the measurement signals are pressure induced signals and wherein the processing unit may be adapted for processing said pressure induced signals such as to detect pressure changes in the hollow cavity structure, and for deriving from said pressure changes whether or not wear or cracks have occurred in the object under study.

The processing unit may be adapted for receiving data of acoustic emission signals from the hollow cavity structure or structure itself and for deriving from said data whether or not wear or cracks have occurred in the object under study.

The processing unit may be adapted for receiving ultrasonic wave data of ultrasonic waves passing over the surfaces of the hollow cavity structure and for deriving from said ultrasonic wave data whether or not wear or cracks have occurred in the object under study. It is an advantage of embodiments of the present invention that alternative techniques - alternative to mere pressure sensing - can be used for assisting in structural health monitoring. In advantageous embodiments, techniques can be combined resulting in a more accurate characterisation of fatigue. The processing unit may be adapted for evaluating data representative for high frequency signals of the acoustic emission signals for deriving whether or not wear or cracks have occurred in the object under study. Said data of acoustic emission signals may be used for localizing wear or a crack in the object under study. It is an advantage of embodiments of the present invention that not only detection but also localization of the crack can be obtained using embodiments of the present invention.

It is an advantage of embodiments of the present invention that alternative techniques - alternative to mere pressure sensing - can be used for assisting in structural health monitoring. In advantageous embodiments, techniques can be combined resulting in a more accurate characterisation of fatigue.

The cavities of the system may comprise a liquid penetrant for visualizing wear or cracks using the naked eye and/or an imaging system. Alternatively, cavities of the system also may comprise a liquid penetrant for identifying wear or cracks using another detection method, e.g. by detecting a particular smell of the liquid penetrant. It is an advantage of embodiments of the present invention that robust systems are obtained. The latter is caused by its integrated character and protection with respect to environmental and operational conditions.

The present invention also relates to a method for manufacturing an object for which structural health monitoring is to be applied, the method comprising defining and obtaining information regarding a position, dimension, shape and orientation of a hollow cavity structure in the object taking into account the loading conditions and positions of a component, and creating the object or a part thereof integrally including the hollow cavity structure by using additive manufacturing taking into account said information. It is an advantage of embodiments of the present invention that the manufacturing allows accurate positioning of the three dimensional hollow cavity structure in the object as well as introducing complex three dimensional hollow cavity structures. Optionally subtractive manufacturing additionally also can be applied. The present invention also relates to a method for manufacturing an object for which structural health monitoring is to be applied, the method comprising defining and obtaining position and geometrical information of a hollow cavity structure in the object, and creating the object or a part thereof integrally including the hollow cavity structure by additive manufacturing taking into account said position information.

It is an advantage of embodiments according to the present invention that the method can be applied without or with only limited impact on the fatigue or wear initiation behavior and fatigue or wear growth behavior.

The present invention also relates to a method for performing structural health monitoring of an object under study, the method comprising applying a pressure, different from the ambient pressure, on a hollow network structure comprising one or more cavities obtained using additive manufacturing forming integrally part of the object under study and being sealed from its environment, and measuring a pressure induced signal to detect pressure changes in the hollow cavity structure for deriving from said pressure changes whether or not wear or cracks have occurred in the object under study.

The method may comprise receiving data of acoustic emission signals from the hollow cavity structure or structure itself and deriving from said data whether or not wear or cracks have occurred in the object under study. The method may comprise evaluating data representative for high frequency signals of the acoustic emission signals for deriving whether or not wear or cracks have occurred in the object under study.

The method may comprise receiving data of acoustic emission signals from the hollow cavity a structure or the structure itself and deriving from said data of acoustic emission signals a location of a crack in the object under study.

The method may comprise receiving ultrasonic wave data of ultrasonic waves passing over the surfaces of the hollow cavity structure and deriving from said ultrasonic wave data whether or not wear or cracks have occurred in the object under study.

The method furthermore may comprise opening or closing at least one valve for creating an isolated region in the hollow cavity structure and for identifying whether or not a crack is present in the object near the isolated region. The present invention also relates to a processing unit for use with a structural health monitoring system, the processing unit being adapted for receiving measurement signals representative of a physical parameter of the fully integrated three dimensional hollow cavity structure and for processing said measurement signals for detecting whether or not wear or cracks have occurred in the object under study.

The measurement signals may be pressure induced signals and the processing unit may be furthermore adapted for processing said pressure induced signals such as to detect pressure changes in the hollow cavity structure and for deriving from said pressure changes whether or not wear or cracks have occurred in the object under study.

The processing unit may be adapted for receiving data of acoustic emission signals from the hollow cavity structure and for deriving from said data whether or not wear or cracks have occurred in the object under study. The processing unit may be adapted for evaluating data representative for high frequency signals of the acoustic emission signals for deriving whether or not wear or cracks have occurred in the object under study. The data of acoustic emission signals may be used for localizing a crack in the object under study.

The processing unit may be adapted for receiving ultrasonic wave data of ultrasonic waves passing over the surfaces of the hollow cavity structure and for deriving from said ultrasonic wave data whether or not wear or cracks have occurred in the object under study.

The present invention also relates to a computer program product for performing, when executed on a processor, a method as described above. The present invention also relates to a data carrier comprising a computer program product as described above and the transmission of a computer program product as described above over a local or wide area network.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows the different levels of technological readiness as known in the art and used by large industrial players.
FIG. 2 shows the S-N curve of unnotched objects under study of a low alloy steel, wherein N is the fatigue life expressed in number of cycles and plotted on a logarithmic scale. S is the stress amplitude in MPa, providing a way of indicating fatigue properties as known in the art.
FIG. 3 illustrates a system for structural health monitoring according to an embodiment of the present invention.
FIG. 4 shows a schematic overview of an exemplary implementation of the hollow network structure implemented in a gear, illustrating an embodiment of the present invention.
FIG. 5 to FIG. 9 illustrates different configurations and methods for manufacturing a system for structural health monitoring according to embodiments of the present invention.
FIG. 10 shows a schematic representation of an exemplary detection procedure according to an embodiment of the present invention.
FIG. 11 illustrates a schematic representation of an exemplary localization procedure according to an embodiment of the present invention.
FIG. 12 illustrates a schematic representation of an exemplary localization procedure based on ultrasone-acoustics guided wave, according to an embodiment of the present invention.
FIG. 13. shows a 3D schematic view of an object under study with an integrated capillary according to an embodiment of the present invention.
FIG. 14 shows the right and front view of the object under study schematically shown in FIG. 13.
FIG. 15 shows the absolute principal stress for unit loading for an object according to FIG. 13 The left column shows the stress distribution in an object under study having a capillary at a depth of 12.5 mm, for the right column the depth is 13.5 mm. The top row shows the stress distribution in the front of the object under study. The middle row shows the stress distribution in the middle section of the object under study and test. The bottom row shows the stress distribution in the bottom of the object under study and test.
FIG. 16 shows schematically the setup for a four-point bending fatigue test setup.
FIG. 17 shows the pressure in the capillary in function of time for the test performed on the first object under study, illustrating features of an embodiment of the present invention. The pressure is indicated in bar.
FIG. 18 shows the pressure in the capillary in function of time for the test performed on the second object under study, illustrating features of an embodiment of the present invention. The pressure is indicated in bar.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "the object under study", reference is made to the structure that is checked and/or monitored for structural integrity e.g. fatigue integrity/wear integrity through an embodiment of the current invention. The monitoring thereby allows early detection as well as follow up of damage in the structure. The structural integrity criteria to be monitored typically will depend on the application. The phenomena to be monitored could be e.g. fatigue cracking, tribological wear phenomena, etc. Not all tribological wear phenomena will be able to be monitored mainly those with a penetrating character towards the inside of the material e.g. abrasive wear, erosive wear, fretting fatigue, etc.. Such structures may be structures in all sectors, including industrial sectors, where the performance and behavior of the components are key criteria for safety or for the direct operational cost. The objects may be metallic structural components although embodiments of the present invention are not limited thereto and also other type of materials can benefit from embodiments of the present invention, the type of material of the object under study therefore being non-limiting for the present invention. Structural health monitoring system according to embodiments of the present invention can for example be used to monitor the structural integrity of different kind structural materials, such as for example polymers, metals, ceramics or combination thereof.

Where in embodiments of the present invention reference is made to " a hollow cavity structure", reference can be made to one or more cavities, e.g. channels or capillaries, of which a cavity length extends in one direction, in some embodiments in at least in two distinct directions and in some embodiments in three distinct directions, i.e. outside an original plane. The cavities may be curved, may have corners, may have internal structures or one or more internal truss structure, may be separate and/or interconnected cavities ..... The one or more cavities may form a network, such as for example a branched network. The hollow cavity structure is, according to embodiments of the present invention, an integral part of the object under study. Where it is stated that a structure is an integral part of the object under study, there is meant that the cavity structure is linked to or part of the object in such a manner that when the internal cavity structure is broken, the object is also damaged. It also feels environmental effects on the object in the same way as the object does. In other words, load and environmental interactions on the object will be transferred to the SHM system such that the load and environmental interactions are felt in the same way as in the object. The interconnection between the object and the cavity structure is not done by an adhesive but by the same material or an alloy of the structure or the object. The cavities may in one embodiment be channels.

Where in embodiments of the present invention reference is made to additive manufacturing techniques, reference is made to the process of creating or joining or combining materials or parts to make three dimensional objects, e.g. from model data. Such techniques may be performed layer by layer. The technique also sometimes may be referred to or may comprise rapid prototyping, additive fabrication, layer manufacturing, freedom manufacturing, three dimensional printing, laser engineered net shaping, direct metal deposition, laser direct casting, laser consolidation, laser powder fusion, laser metal forming, directed light fabrication, laser powder deposition, automated laser powder deposition, shape deposition manufacturing, electron beam melting, laser rapid forming or laser additive manufacturing. Additive manufacturing can be based on a 3D model of an object, e.g. a CAD model. Depending on the particular additive manufacturing technique used, the object can be made in a range of different materials.

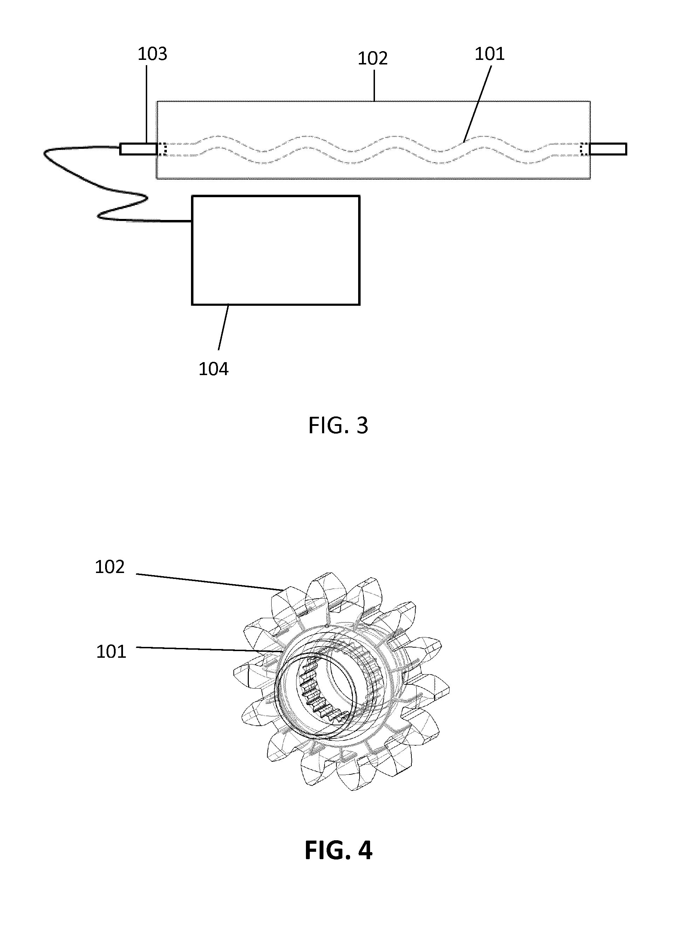

In a first aspect, the present invention relates to a system for performing structural health monitoring of an object under study. The object may thereby be for example in an operation state or in a standby state, thus allowing e.g. to perform structural health monitoring during operation or without de-mounting. The system comprises a hollow cavity structure comprising one or more cavities obtained using additive manufacturing, the cavity structure being sealable from its environment and forming an integral part of the object under study, , the cavity structure being furthermore connectable to a pressure sensor for sensing a pressure in the cavity structure. An example of such a structure 101 is illustrated in FIG. 3 whereby the structure 101 is an integral part of the object under study 102. The system also comprises or is connectable to a pressure monitoring sensor 103.

By way of illustration embodiments of the present invention not being limited thereto, different features and advantages of embodiments of the present invention will now be further discussed with reference to FIG. 3 and the further drawings.

According to embodiments of the present invention, the system may be such that at least one cavity of the hollow cavity structure can be described as a volume being defined by sweeping an area defined by a closed two dimensional curve, along at least one path, so that the path passes perpendicularly through the plane in which the closed two dimensional curve is defined. The path may be propagating in a one dimensional space, an at least two dimensional space or an at least three dimensional space. In some embodiments, the cavities may be channels. In certain embodiments of the current invention the hollow network structure 101 has a network of capillaries similar to the nervous system of living being.

The practical implementation of such a hollow network structure 101 comprising cavities, e.g. internal curved or cornered cavities such as channels or capillaries, in an object under study is challenging both from production point of view as well as from structural integrity of the object under study point of view. Embodiments of the present invention advantageously can make use of additive manufacturing. A number of examples of additive manufacturing techniques have been mentioned above. The additive manufacturing techniques may be laser-based additive manufacturing techniques, embodiments not being limited thereto.

As indicated in FIG. 3, the system comprises or is connectable to a pressure monitoring sensor which may be an off the shelve available pressure sensor or a dedicated sensor. In one embodiment, the sensor may be an integrated sensor, although the invention is not limited thereto. The pressure sensor may be based on any suitable pressure sensing technique and may be an absolute or a relative pressure sensor. If a pressure sensor is mounted on a cavity it can be connected to a measurement system that reads out the pressure value or locally stored values. This system 104 can be positioned on a specific location of the application or structure or it can remain detached from the structure or application. The connection between the measurement systems can be done by a wire or wireless. In a wireless configuration/ wired configuration the different pressure sensors installed on a structure could be monitored simultaneously what would decrease the inspection time significantly. Besides the measurement system also a direct visual indication of the pressure sensor itself could indicate that pressure sensor has tripped a certain value. In addition the end user could also opt not to install a pressure sensor directly on the structure itself but only a valve that can be connected to a measuring sensor and device during an inspection and quickly check if the structural integrity has decreased. All the above mentioned selections will depend largely on the end user requirements, his design methodology and the application.

The system may also comprise a processing unit 104 for monitoring the pressure in the hollow network structure. More particularly, advantageously the pressure sensing data is processed for monitoring a stability of the pressure.

In a second aspect, the present invention relates to the definition methodology of the SHM and the manufacturing method for an object for which structural health monitoring is to be applied. The method comprises defining and obtaining positional and geometrical information of a hollow cavity structure in the object. Defining and obtaining information typically can include determining a position, dimension, shape and/or orientation of the hollow cavity structure taking into account the loading conditions, boundary conditions and position of a component that is subject to stress. The information can be obtained and defined such that the structure has little or no impact on fatigue or wear initiation and fatigue or wear growth behavior. In one aspect, the present invention also relates to the design of an object for which structural health monitoring is to be applied, comprising the defining and positioning step but not the actual manufacturing step. Such a method may be computer implemented, as will be described later.

The manufacturing method further comprises creating the object or a part thereof integrally including the hollow cavity structure using additive manufacturing, taking into account said positional and geometrical information. In some embodiments, an additional subtractive manufacturing step is also applied (see examples further on).

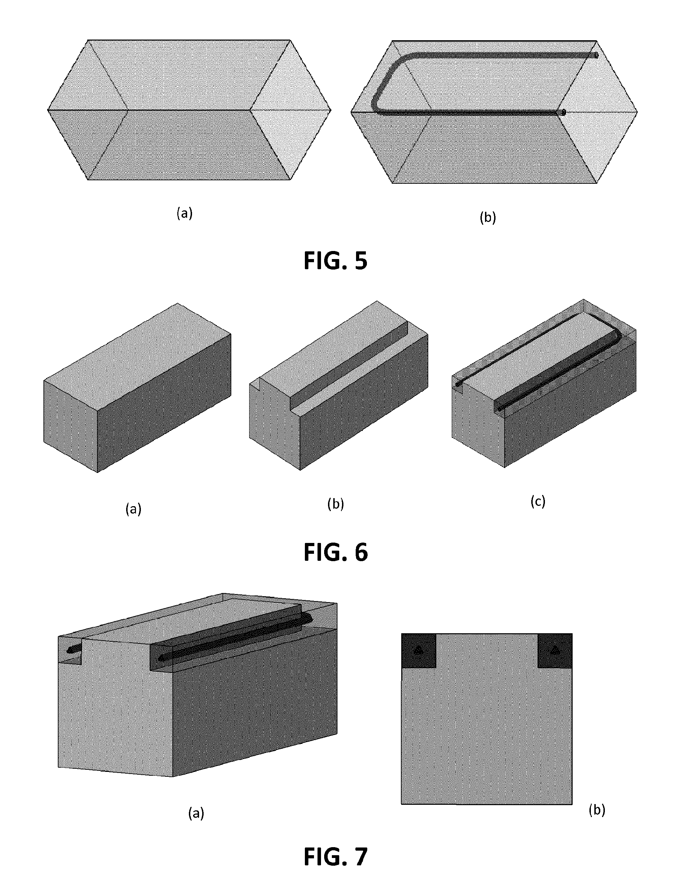

Using additive manufacturing allows accurate positioning of the internal structure. The additive manufacturing techniques may be any type of additive manufacturing techniques as described elsewhere in the present application. The additive manufacturing may for example be an additive manufacturing technique, also referred to as 3D printing, as schematically illustrated in FIG. 5 to FIG.9 which will discussed later.

The preferred structure of the structural health monitoring system for a certain application/structure will also be defined by the requirements of the end-user, the requirements imposed by the applied structural design methodology of the structure and the economic impact of each requirement. Some of these requirements that may be taken into account - although embodiments of the present invention are not limited thereby and thereto - are : (the following list is by no means exhaustive):
- The need for monitoring a structural monitoring area in a global manner, a local manner or a combination of the two.
- The need for being able to perform additional visual inspections, which may provide complementary information as well as information that can be used for cross-checking.
- The need for being able to perform a fixed maintenance schedule or to perform a condition based maintenance schedule or a combination thereof.
- The need for online and/or offline inspection. Online inspection provides the advantage that monitoring can be performed in operating conditions for the system.
- The need for allowing detecting and/or monitoring of initial structural degradation, e.g. crack initiation. The structure of the cavity/ capillary position, dimension or shape used for the structural health monitoring may be selected depending on the minimal level that needs to be detected.
- The need for monitoring the evolution of structural degradation, e.g. to monitor the wear rate or crack growth rate. Embodiments thereby may be adapted for monitoring critical structural degradation, which typically occurs before structural failure appears.
- The need for monitoring the evolution of the structural degradation, e.g. for evaluating the wear rate or crack growth rate. In particular embodiments, the critical structural degradation can be monitored, which occurs before structural failure appears.

Initial structural degradation and critical structural degradation are related to important parameters in damage tolerance methodologies. The first term is "detectable crack length" this is the minimal crack length that certainly (or with a certain probability of detection) will be detected by an inspection during production or maintenance. These values depend on the used inspection method and structure. These values are often different during production compared to maintenance. The second term is "critical crack length", this is the crack length that the structure is still able to withstand statically the highest load level that the structure is expected to be subjected to in its lifetime without failure. In production the parts are typically inspected in a final production stage, the inspection method applied during production will define the detectable crack length. This detectable crack length will be used during the design of the structure to define the threshold for the first inspection of the structure. This threshold is defined as the number of cycles between the minimal detectable crack length and critical crack length. This value is determined with crack growth simulations and validated by experimental testing. Due to the fact that often the inspection methods used during maintenance have a higher minimal detectable crack length, a second inspection will need to be done sooner than the number of cycles for the threshold to verify that no crack has appeared. This number of cycles is typically called the interval. This number of cycles is again determined with crack growth simulations and validated by experimental testing and lower than the threshold value due to the fact the initial crack was larger. To summarize the first inspection is done at the threshold and the subsequent inspections are done at each interval from the moment the threshold has been passed. If a crack would appear in a structure and is still smaller than the critical crack length the structure can be continued to be used but another inspection program probably needs to be defined. If a crack would appear that is higher than the critical crack length the structure has to be replaced immediately, this can of course cause serious downtime cost of the structure or application of which the structure is a part of.

In some embodiments according to the present invention, the system may be adapted for localizing the structural degradation. In some embodiments, the system may be adapted for detecting multiple failures and take this into account.

Depending on the selected application(s), the selected structure thus and embodiment of the current invention may be tuned.

A first cavity in the network can be introduced to mimic the detectable crack length of the damage tolerance methodology described above. A system comprising such a cavity will allow the user to confirm that no crack has appeared in its structure with a certain minimal crack length in the required zones. If a crack has been indicated by this type of system, the user will have the opportunity to schedule a specific maintenance plan for this structure. A second cavity in the network could be integrated in accordance with the critical crack length. This capillary/cavity will allow the user to confirm that no crack has appeared in its structure with a critical crack length in the required zones. This will inform the user that the structure has to be taken out of operation immediately to prevent a failure of the structure. A third capillary/cavity or network could be integrated in between the first and the second one to monitor the crack growth speed towards the operator.

By way of illustration, embodiments of the present invention not being limited thereto, some examples of structures and production methodologies are described below.

In a first example, a hollow network structure 101 present in a gear is shown in FIG. 4. The hollow network structure is in the present example composed of capillaries interconnected with each other.

In a second example shown in FIG 5, to demonstrate the feasibility of realizing a three dimensional hollow network structure 101 using laser-based additive manufacturing, a cylindrical capillary was chosen. Other cavity types are possible and the results of the example with the cylindrical cavity can be used as a good initial reference. The advantage of using additive manufacturing is the minimal amount of restrictions towards the form of three dimensional hollow network structure from production point of view , however for this example sections of the cylindrical capillaries were chosen straight as they can also be produced with standard machining methods which allows a comparison from production perspective and from the influence of the specific production process on the structural integrity behavior. These straight sections are interconnected to each other with corner pieces and extend in different length directions, thus forming the hollow network structure with additive manufacturing. An example of such a structure is shown in FIG. 5(b).

Using layer wise layer cladding it was possible, in the experiment performed, to realize an object with a minimum achievable cylindrical diameter of 1 mm and a maximum inclination angle of 50°.

The limitations are the limitations of the used machine and are not limitations of the techniques applicable for embodiments of the present invention. Cubes of circa 20x20x20mm were created with an integrated capillary for different constant diameter and inclination angles.

Further by way of illustration, a number of methods are described allowing production of the network of cavities in the structural health monitoring system.

The cavity can be integrated on the inside of the structure during the build-up of the entire structure by additive manufacturing process. In this condition the part would be completely manufactured with additive manufacturing techniques and gives the minimal amount of restriction towards the designer of the product.

Besides additive manufacturing also a hybrid process could be used to produce the cavities. A hybrid process is a combined process of additive manufacturing with a substractive process such as for example machining or punching, electron beam machining, laser drilling or laser ablation. After each layer or a number of layers that are deposited, a machining, punching, eletron beam machining, laser drilling or laser ablation process can take place to create or finish the outer surfaces and the inner surfaces of that section. As final process step a cold expansion could also be applied with a small mandrel or shot peen operation, etc. to create a beneficial residual stress pattern in the vicinity of the capillary internal structure. The prescribed production steps can be applied partly or as whole to generate the cavity/capillary or network for the structural health monitoring system. An example of an object create with such a manufacturing technique is shown in FIG. 5, whereby at the left hand side the original manufactured part manufactured with conventional methods without integrated cavity and at the right hand side (b) the additive manufactured part with integrated cavity.

The capillary/cavity can also be added into the original dimensions of the structure/application that is completely produced with a conventional production process (e.g. machining) with an exception of the capillary/cavity, as shown in FIG. 6a. In a production stage, an extra slot is machined, as shown in FIG. 6b. Afterwards the slot is filled up again with an additive manufacturing process or a hybrid process with the integration of a cavity as indicated in FIG. 6c. The added material itself can be the same material of the structures itself or from a different alloy or type. With a hybrid process, there is meant that a part of the structure is made using conventional production methods, whereas another portion of the structure is made using additive manufacturing. For example, it is possible that a part of the straight capillaries/cavities are manufactured with conventional production methods such as electrical discharge machining, machining, etc. In FIG. 6c only the corners would then be produced with additive manufacturing techniques.

The cross-section of the cavity/capillary certainly doesn't have to be circular. It can have for example be a triangular section with curved corners as indicated in FIG. 7.

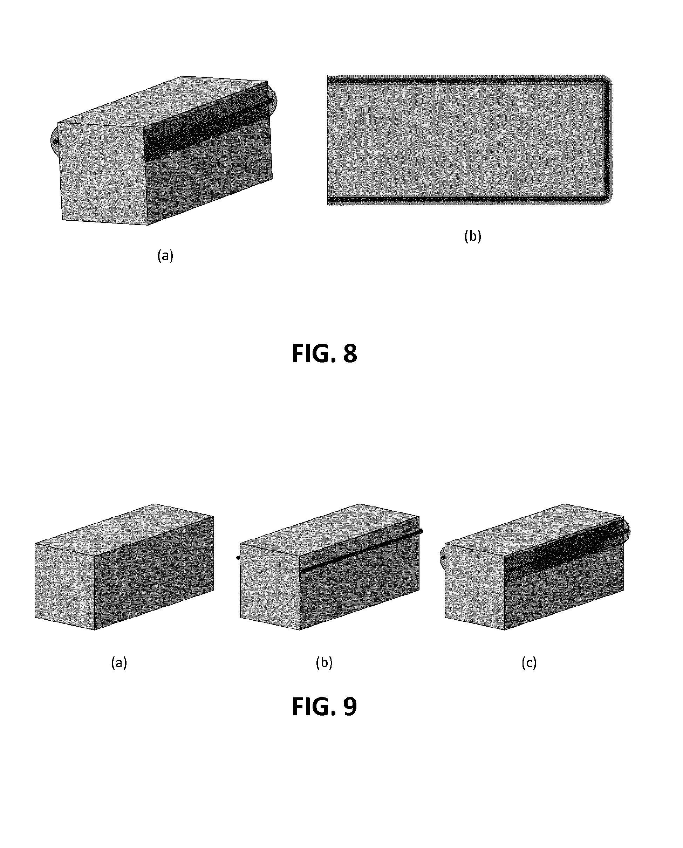

Another configuration would be to integrate a capillary/cavity towards the structure but not on the inside of the original part but to add this at the outside of the original dimensions of the structure/application. This kind of configuration is presented in FIG. 8 from two viewpoints. The biggest part is again manufactured with conventional production methods and other parts are added on the outer side of the base structure using additive manufacturing or a hybrid method. The added material itself can be the same material of the structures itself or from a different alloy or type.

Another application method would be to join a structural part with a conventional manufactured, preformed capillary as shown in FIG. 9b. The join process would be performed by an additive manufacturing process that would combine the two structures with each other. The two structures and the joining material could be again of the same material type or not. This method is graphically represented in FIG. 9 for adding a capillary to the outer side of the original dimensions of the base structure. But this could also be done within the original dimensions of the structure as shown in FIG. 6.

An additional feature of an embodiment of the present invention could be added by the application of a type of liquid penetrant, colour dye or a gas could be integrated on the inside of the cavities/capillaries. The liquid penetrant, dye or gas could be applied on the inside of the capillaries/cavities or networks with a small or no overpressure if a crack would appear the fluidum would escape and could be detected by a visual inspection or a gas detector. The gas could have a strong odour and could function as safety for the human persons in the vicinity. The dye or gas could also be used in a gearbox for example if there is no place or possibilities to install a sensor on top the structure, this would allow the user to monitor different structures (e.g. gears) at the same time with one gas detector that is able to detect different types of gases or by the scheduled oil inspections. Another application could be for example an implant at the inside of a human body, a fluidum could be integrated permanently or from time to time in the capillary/cavity or network that would allow the specialist to detect easily with the current available medical imaging techniques if structural integrity has decreased below an acceptable limit.

The system furthermore may comprise further optional features and components as known by the skilled person.

In still a further aspect, the present invention relates to a method for performing structural health monitoring of an object under study. The method may be applicable to a group of applications, e.g. for characterizing fatigue, wear, crack formation, etc. The method comprises applying a pressure once during its lifetime (so pressure remains permanently in the cavity when no failure occurs) or at regular time intervals, different from the ambient pressure, on a hollow network structure forming integrally part of the object under study and being sealed from its environment, and measuring a pressure induced signal to detect pressure changes in the hollow cavity structure (101) for deriving from said pressure changes whether or not the structural integrity has been deteriorated e.g. cracks or wear have occurred in the object under study. A number of different characterization techniques may be used separately or in combination. In one example use is made of acoustic emission from the hollow structure or from the structure itself. In another example, use is made of a reply to an ultrasone wave. In yet another example, use is made of pressure sensing. By locally performing measurements, optionally using a plurality of valves for opening or closing at least one valve for creating an isolated region in the hollow structure, localization of fatigue, wear or crack formation or growth can also be performed.

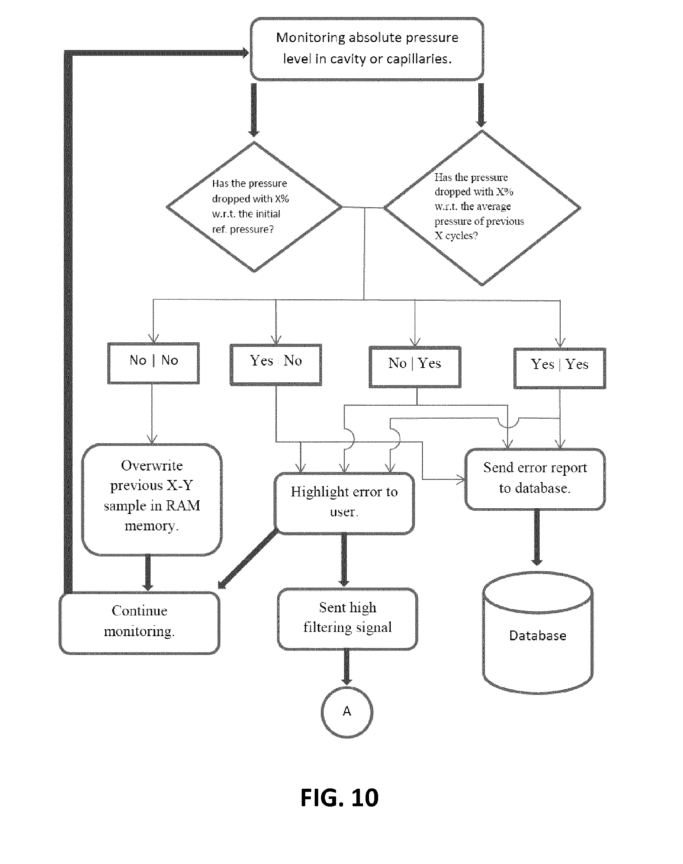

By way of illustration, embodiments of the present invention not being limited thereto, a number of particular examples will now be discussed with reference to FIG. 10 to FIG. 12, highlighting different monitoring and/or localization procedures that can be performed.

In a first exemplary method, a monitoring cycle is performed as shown in FIG. 10

In the beginning of each cycle a pressure level is measured, e.g. the absolute pressure level, in the hollow network structures 101. Such sensing typically may be performed using a pressure monitoring sensor 103 adapted for connecting to the three dimensional hollow network structure.

In a next step, the measured pressure is compared with the initial pressure value and/or with the previous pressure value or an average of a number of previous measurements. If the pressure has changed over more than a predetermined value or relative amount with respect to the initial or previous pressure values, i.e. in one or both comparisons, an error is highlighted to the user and a high filter signal can be passed to a localization procedure. The error report typically is also stored in a database. If no substantial drop has been measured, the memory is updated, e.g. previous pressure values may be replaced by the more recently measured values. The monitoring cycle may be repeated at predetermined time intervals, may be performed continuously or may be triggered by operational events during the lifetime of the object under study.

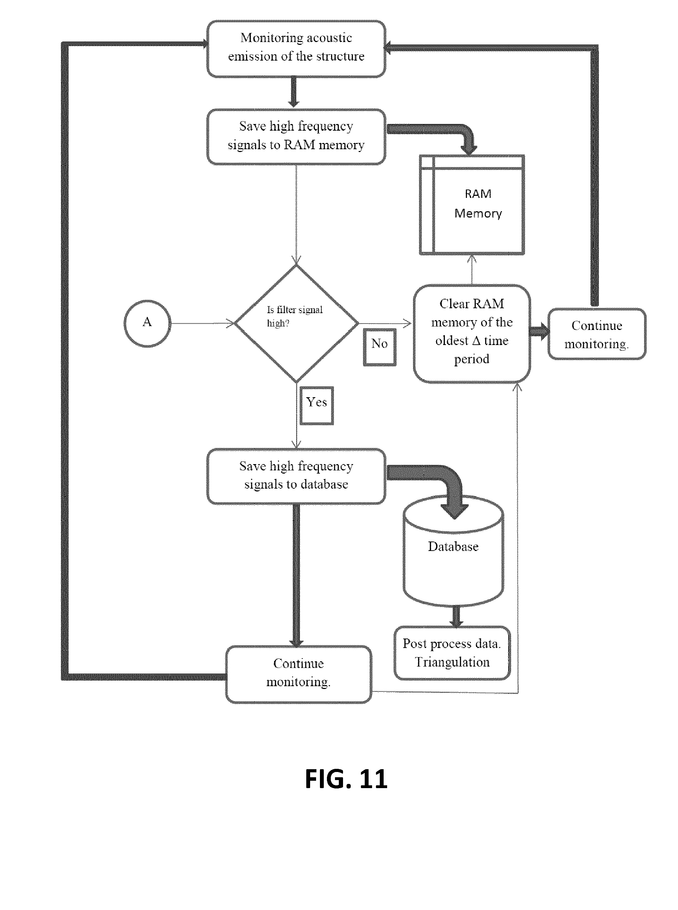

Besides a method for monitoring to detect a crack or wear in the object under study 102, in certain embodiments of the current invention a method for localization of wear or cracks is illustrated with reference to FIG. 11. Such a method typically may comprises in one embodiment making use of acoustic emission, the step of monitoring the acoustic emission of the object under study 102 and analyzing the result. The acoustic emission data is analysed whereby the high frequency signals can be stored in a memory, e.g. in a RAM memory. The data may replace older data, e.g. the oldest data, although the data also may be simply added to the memory.

If a high filter signal is received from the detection procedure, the high frequency signals detected from the acoustic emission data can be stored in a database and processed, e.g. by triangulation, for deriving localization information of a crack or wear.

Typically, unless final failure has been established, monitoring the acoustic emission of the object under study is continued.

The localization procedure may be performed offline.

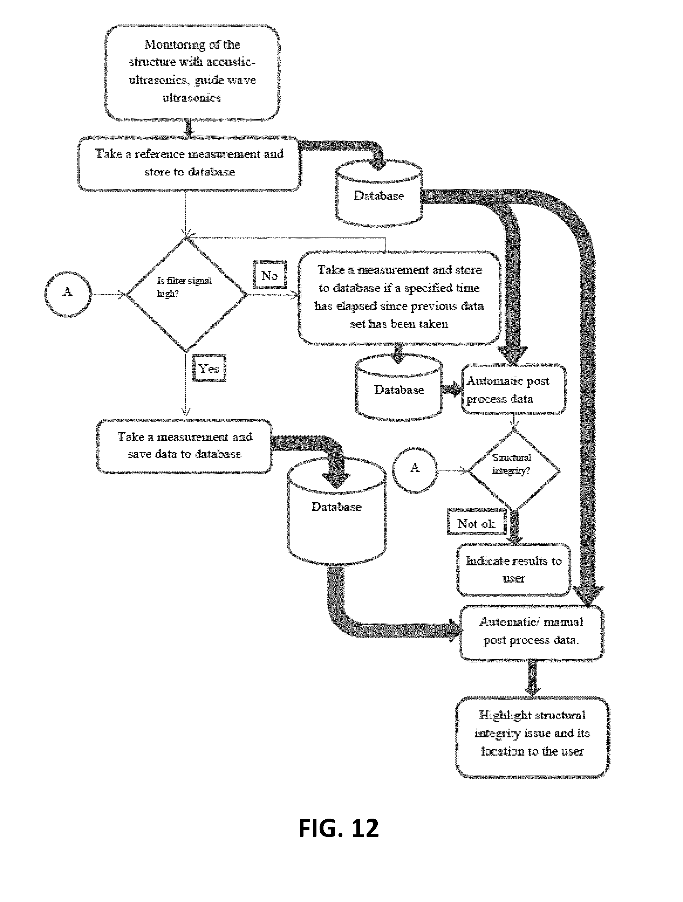

An alternative example of a localization procedure is shown in FIG. 12, whereby use is made of acoustic-ultrasonics.

In a first step, the structure is monitored with acoustic-ultrasonics, e.g. using a guide wave of ultrasonics travelling of the internal structure/cavity. A reference measurement has previously been stored to a memory at the start of the usage life of the structure or database or may be recorded at the initiation of the process. Based on a detection procedure as e.g. described with reference to FIG. 10, when an indication of a detection, e.g. a high filter signal is detected, high frequency signals in the acoustic-ultrasonics data from a new measurement are stored and can be processed, e.g. later manually or directly automatically. When the filter signal is not activated a new measurement can be obtained after a predetermined time interval since the last previous measurement. The received acoustic ultrasonic data can furthermore be checked whether the structural integrity is ok, based on a predetermined algorithm, a set of rules, based on neural network processing, etc. If it is found that the structural integrity is not ok, the latter is indicated to the user. Such an indication can also be shown based on a comparison of acoustic-ultrasonics post processed result and the filter signal.

It is to be noticed that in general, methods according to embodiments of the present invention may make use of comparison of previously measured data with currently measured data and that, if the difference exceeds a predetermined value, action can be taken. The processing may be based on predetermined algorithms, predetermined rules, neural network processing, comparison based on look up tables, etc.

In yet another aspect, the present invention relates to a processing unit for use with a structural health monitoring system. Such a processing unit may be part of a system as described in the first aspect or may be separate thereof. It may be positioned on the object under study or may be connectable thereto, directly or indirectly. The processing unit is adapted, e.g. by comprising an input unit for receiving measurement signals representative of a physical parameter of the fully integrated hollow cavity structure and for processing said measurement signals for detecting whether or not wear or cracks have occurred in the object under study. The processing unit may be adapted for performing a method as described in the third aspect. It may be e.g. adapted for processing pressure signals, acoustic emission signals or acoustic ultrasonic guided wave signals and for deriving thereof a change indicative of occurrence structural degradation (e.g. of fatigue, wear or cracks) in the object under study. The processing unit may be adapted for taking into account information for deriving a location of the fatigue, wear or cracks, e.g. data of an additional measurement technique, data of settings of valves in the system, etc.

In still another aspect, the above described system embodiments may correspond with an implementation of the method for designing an object for structural health monitoring or part of a method for structural health monitoring of an object under study, as a computer implemented invention in a processor. Such a system or processor - the processor also being discussed in functionality in an aspect described above - includes at least one programmable computing component coupled to a memory subsystem that includes at least one form of memory, e.g., RAM, ROM, and so forth. It is to be noted that the computing component or computing components may be a general purpose, or a special purpose computing component, and may be for inclusion in a device, e.g., a chip that has other components that perform other functions. Thus, one or more aspects of the present invention can be implemented in digital electronic circuitry, or in computer hardware, firmware, software, or in combinations of them. While a processor as such is prior art, a system or processor that includes the instructions to implement aspects of the methods is not prior art. The present invention thus also includes a computer program product which provides the functionality of any or part of the methods for designing or monitoring structural health according to the present invention when executed on a computing device. In another aspect, the present invention relates to a data carrier for carrying such a computer program product. Such a data carrier may comprise a computer program product tangibly embodied thereon and may carry machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

By way of illustration, embodiments of the present invention not limited thereby, a further example and experimental results obtained therewith are discussed.

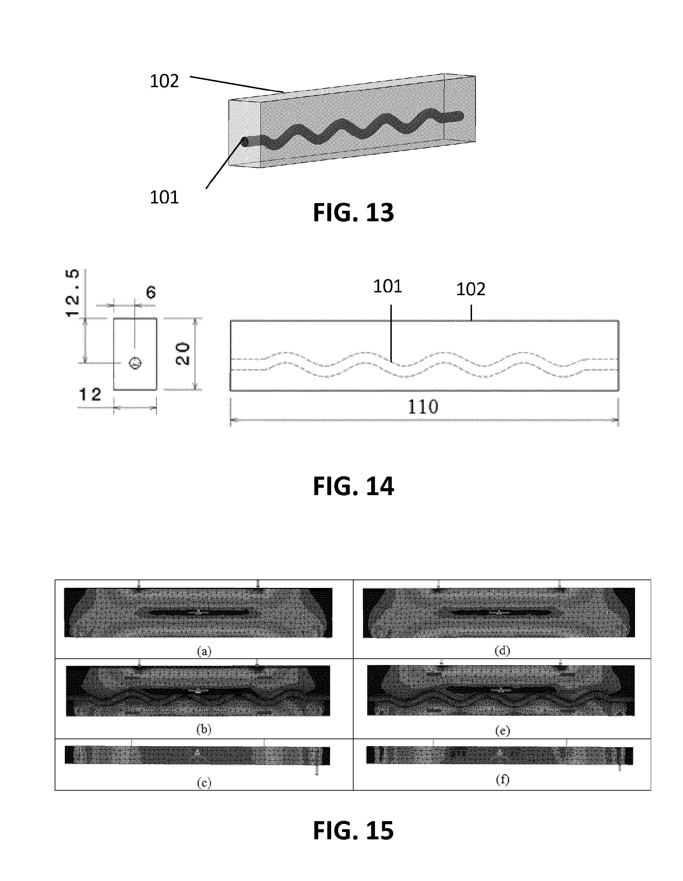

In the particular example shown, a three dimensional hollow structure 101, more specifically a cylindrical capillary is realised that has no impact on the fatigue initiation behaviour of the object under study 102. In the example, a 3D feature having a sinusoidal shape of the capillary is formed. Such a structure is obtained by sweeping an area, defined by a closed two dimensional curve, along at least one path, so that the path passes perpendicularly through the plane in which the closed two dimensional curve is defined, the path in this case being sinusoidal. The integrated capillary has a diameter of 3 mm and the path has a sinusoidal shape with an amplitude of 2 mm and a period of 25,7mm as shown in FIG. 13. The other geometrical details are indicated in FIG. 14. The object under study 102 in the present example is made of stainless steel 316L and is produced with layer-wise laser cladding. Two objects under study 102 were built in 'standing' direction with outer dimensions 12mm × 20mm × 110mm. After the layer-wise laser cladding process the objects under study were machined to final dimensions as specified in FIG. 14.

The determination of the location, internal shape, orientation and network of the first type of cavity/capillary or network defined above for the four point bending test samples was based on the following two design criteria: (*i*) the tensile stress on the highest loaded plane (outer surface) should not be increased (*ii*) the tensile stress on the tops of the sinusoidal shaped capillary should not be higher than the highest loaded plane.

The verification of these design criteria were done via a detailed static finite element simulation. This simulation with unit loads revealed that for a capillary with a diameter of 3mm both criteria were just reached for a capillary depth of 13,5mm, for this depth the tops of the sinus are 3mm from the outer surface away. The conservative defined design criteria were followed and specimens with a depth of 12,5mm were built for this depth the tops of the sinus are 4mm from the outer surface away. The capillaries currently applied for feasibility tests varied between 0,5mm and 5mm in diameter size. When a hybrid process (additive manufacturing and subtractive manufacturing) would be applied this diameter size could be decreased down to tens of micrometers or even down to 3 µm.

The internal capillary is realized using laser based additive manufacturing whereby the capillary is designed such that:
- The tensile stress on the highest load plane (outer surface) of the object under study 102 is not increased by the presence of the internal capillary.
- The tensile stress on the tops of the sinusoidal shaped capillary is not higher than the highest loaded plane.

The internal capillary is located based on these design constraints and the design is verified using a detailed static finite element simulation. This simulation with unit loads reveals that for a capillary with a diameter of 3mm both criteria are just reached for a capillary depth of 13,5mm (see FIG. 15), for this depth the tops of the sinus are 3mm from the outer surface away. The conservative defined design criteria were followed and objects under study 102 with a depth of 12,5mm were built. For this depth the tops of the sinus are 4mm from the outer surface away.

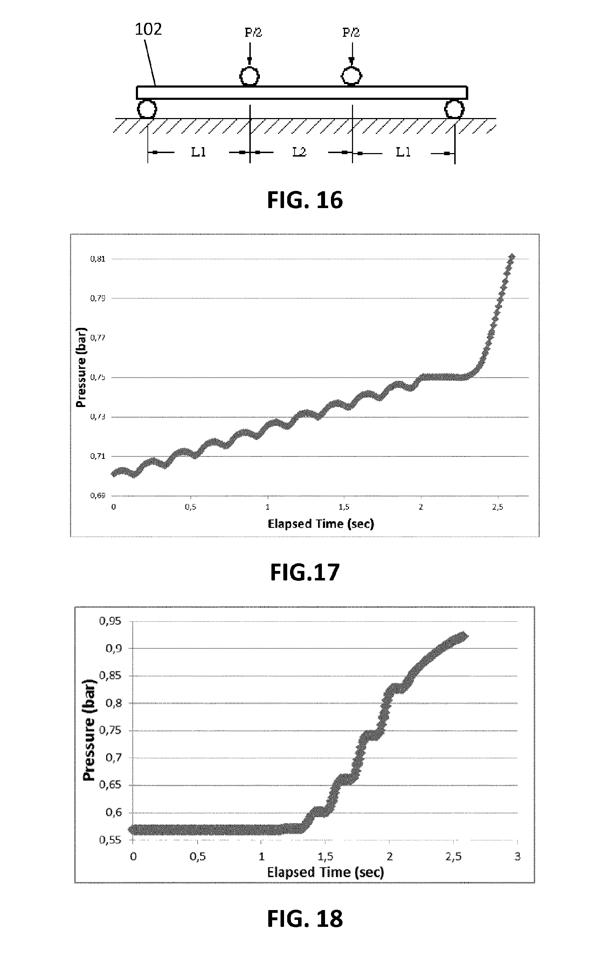

In the experiments, the objects are provided with a pressure transducer 103 (Kulite XTL-123C-190M- 1,7-BAR-A) at one side and with a check valve (Clippard MCV-1-M5) at the other side. After sealing, each object under study 102 was placed in a Vacuum chamber until the air in the capillary reached an absolute pressure of ≈ 0.55 bars. As a final step an extra stop (Clippard 11755-M5-PKG) was installed on the check valve as an extra occlusion. Thereafter the object under study is put in a servo hydraulic test bench. The load on the object under study is schematically drawn in FIG. 16. A four point bending test is applied. This test setup produces a uniform moment without shear between the two inner loading rollers in the object under study which gives rise to a uniform maximum tensile stress in the surface of the object under study 102. In bending the stress varies through the depth of the beam in such a way as long as the loading remains below yielding.

Unnotched objects under study 102 are subjected to a cyclic fatigue loading with constant amplitude. Unnotched objects under study 102 are used as good test objects based on the fact that unnotched objects under study 102 have a higher fatigue initiation resistance than the identical object under study with a notch. This choice is conservative with respect to the test objective to indicate that the crack initiates at the outer surface of the object under study 102 and not at the inner surface of the integrated three dimensional hollow network structure 101.

For the sinusoidal capillary 101 integrated into the object under study 102, the moment of inertia varies for the different cross sections due to the fact that the circular cross section of the capillary has a different distance towards the neutral axis. The further the cross section is removed from the neutral axis the lower the moment of inertia becomes and the higher the nominal stress in the section.

The locations with the highest likelihood for crack initiation from the capillary are situated at those cross sections that are furthest away from the neutral axis if the crack would nucleate from the capillary. The principal reason for this higher probability is directly related to the higher stress values at these stress concentration locations. If the stress concentration around the capillary itself would have an impact on the fatigue initiation behavior on the outer surface of the object under study, then the likelihood of initiation should be higher at those cross sections that are again furthest away from the neutral axis. Due to the fact that the stress concentration of the capillary are closer to the outer surface and the stress values at the stress concentration locations are higher.

Fatigue properties of unnotched objects under study are generally supposed to be material properties such as S-N curves. Fatigue life under cycling loading consists of two phases: crack initiation life and crack growth period. The second period is relatively short for unnotched objects under study at low loads if compared with the crack initiation period.

The test procedure applied was the step method. Step testing provides a method to determine the endurance stress (or fatigue strength) in an approximated manner for a particular stress ratio with a single object under study as well as a method of generating endurance limits for one-of-a-kind objects under study. The initial stress amplitude is chosen below the fatigue limit of the object under study. For each step a large number of cycles N with the same loading are applied. If failure didn't occur the stress amplitude is increased with a selected step and again N numbers of cycles are applied. This procedure is repeated until failure occurs. From this test procedure the endurance limit is defined as the highest stress value wherefore N numbers of cycles have been applied without crack initiation during the step test. If the initial fatigue stress level is chosen too high and the sample breaks before reaching the initial N number of cycles, the endurance limit can't be determined.

The fatigue tests were carried out on an MTS machine with a maximum static and dynamic load capability of 100 kN. During the tests the pressure transducer 103 was connected to the capillary, the actuator load and displacement were monitored continuously.

The applied sinusoidal cyclic load in each step had a constant amplitude with a R ratio equal to 0.1 and frequency of 5Hz. For the initial step of the first object under study the cyclic peak stress was limited to 20% of yield stress (σ_{y}) and the number of cycles to 100.000. In subsequent steps the peak stress was increased by 5% of σ_{y} until the fatigue load reached the value of 40% of σ_{y}, where beyond this level the peak stress increased by 10% of σ_{y} for each step with exception of the last two steps until the crack was detected. For the initial step of the second object under study the cyclic peak stress was limited to 35% of σ_{y} and the number of cycles to 100.000. In the second object under study, the first loading step of the fatigue load was 35% of σ_{y} and its duration was 100.000 cycles. In every next loading step the amplitude was increased by 5% of σ_{y} until the fatigue load reaches the value of 40% of σ_{y} beyond this level the fatigue load increased by 10% of σ_{y} until the crack was detected. Concurrently, liquid penetrant inspections were performed on the objects under study as a reference. Both of the objects under study 102 were inspected under the ultraviolet light for the detection of possible crack initiations. The products that have been used were ZYGLO® Fluorescent Penetrant Kit.

Nine steps were tested for the first object under study 102. This gave a total of 1.309.009 loading cycles before the crack reached the capillary and the test was automatically stopped. For each step 100.000 cycles were tested with exception of step 8 and 9 where respectively 500.000 and 109009 cycles were applied. The peak stress started from the 9,9 % of σᵤₜₛ (56 MPa ultimate tensile strength) and reached 68,9 % of σᵤₜₛ (390,6 MPa) in step 9.

Sixteen steps were tested for the second object under study 102. This gave a total of 1.888.291 loading cycles before the crack reached the capillary and the test was automatically stopped. For each step 100.000 cycles were tested with exception of step 16 where 388.291 cycles were applied. The peak stress started from the 17,2 % of σᵤₜₛ (97,65 MPa) and reached 83,7% of σᵤₜₛ (474,3 MPa) in step 15 and 16.

In step 9 after 100.000 cycles for the first object under study, a crack was detected on the surface of the object under study 102 with the liquid penetrant inspection. After applying 9009 extra cycles in step 9 the crack reached the capillary and the effective structural health monitoring (eSHM) system detected the crack and stopped the test. This clearly indicates that the crack grows from the outer surface towards the capillary and not vice versa. In the second object under study the crack wasn't detected prematurely with a liquid penetrant inspection due to the fact that no intermediate liquid penetrant inspections were performed after each 100.000 cycles in step 16. Nonetheless the eSHM system detected successfully the crack and the test was stopped.

The pressure values for sensing that typically were applied during testing varied between 0,25 bar and 0,75 bar absolute pressure, these values can of course be lower. Currently air was used but this may equally be an inert atmosphere in the capillary or cavity (this will improve the crack initiation resistance of the internal structure). This can e.g. be done by flushing the capillary for example with argon and afterwards applying an under pressure. Embodiments of the present invention can advantageously make use thereof.

The absolute pressure increases stepwise when the crack infiltrates the capillary. The gradual character of the pressure increase is linked with the cyclic loading and the fact that the crack opens and closes during each load cycle. This phenomenon could be clearly observed by plotting the pressure values versus elapsed time for the last applied load cycles (see FIG. 17 and FIG. 18). The difference between the two graphs is related to three principal causes:
- The different peak stress which was applied in the last step of each object under study
- The pre-set limit for the pressure transducer that activate the stopping procedure of the controller of the test machine
- The stopping procedure was different for each object under study. For the first object under study the pre-set limit was 0,75 bar. On the moment that the pressure exceeded this value the actuator was switched off automatically. This procedure started for the first object under study at 2s as depicted in FIG. 17. The stopping procedure caused an overload and this caused the pressure to rise to an absolute value of 0,81 bar. For the second object under study the pre-set limit was 0,83 bar. On the moment that the pressure exceeded this value the actuator was stopped. This procedure started for the second object under study at 2,14s as depicted in FIG. 18. Due to the higher loading the object under study was plastically deformed and caused the capillary to be in contact with the atmosphere.

After fatigue testing the two objects under study were examined with X-ray tomography. X-ray tomography is a non-destructive technique which enables the visualization the internal structure of complex objects. In this manner the exact location could be defined where the crack infiltrated the capillary. It was found that the crack developed through the region of the maximum peak of the sinus. This zone has the lowest likelihood of crack initiation and lowest possible influence of the crack initiation behaviour for cracks starting from the outer surface as explained earlier. This means that the capillary has no crucial influence on the fatigue initiation location and behaviour for these objects under study and for these test conditions.

Afterwards also a fracture analysis was performed with a metallographic microscope and a scanning electron microscope. This analysis also confirmed that the cracks initiation location was situated on the outer surface, more particular at a corner. This could be clearly observed by the faceted surface of the crack initiation location.

The performed test illustrates:
- that it is feasible to integrate a three dimensional hollow network structure 101 according to the present invention in an object under study 102
- that the three dimensional hollow network structure 101 under a pressure different than the environment pressure and being monitored through a pressure sensor 103 according to the present invention allows to detect the presence of a crack
- that the crack initiates at the outer surface of the object under study 102 to the inner surface of the three dimensional hollow network structure 101 and not vice versa
- that the three dimensional hollow network structure 101 was positioned such, by following the design constraints, that the presence of the three dimensional hollow network structure 101 had no influence on the crack initiation behavior.

The above example shows that the internal three dimensional hollow structure can be designed such that it has no influence on the crack initiation location, it has no influence on the crack initiation behaviour and the crack initiates at the outer surface and grows to the inner surface of the three dimensional hollow structure 101. The structures can be made using additive manufacturing. Successful crack detection was obtained and moreover remarkable load levels were obtained for these particular examples.

## Claims

1. A system for performing structural health monitoring of an object (102) under study, the system comprising:
a hollow cavity structure (101) comprising one or more cavities obtained using additive manufacturing, the cavity structure (101), being sealable from its environment and forming an integral part of the object (102) under study, the cavity structure being furthermore connectable to a pressure sensor (103) for sensing at least one pressure inside the cavity structure (101).

2. A system according to claim 1, wherein at least one cavity of the hollow cavity structure (101) can be described as a volume being defined by sweeping an area, defined by a closed two dimensional curve, along at least one path, so that the path passes perpendicularly through the plane in which the closed two dimensional curve is defined, with the path propagating in at least a two dimensional space.

3. A system according to any of the previous claims, wherein at least one cavity of the hollow cavity structure can be described as a volume being defined by sweeping an area, defined by a closed two dimensional curve, along at least one path, so that the path passes perpendicularly through the plane in which the closed two dimensional curve is defined, with the path propagating in an at least three dimensional space.

4. A system according to any of claims 2 or 3, wherein the area varies for at least a number of points of the path.

5. A system according to any of the previous claims, wherein at least one cavity of the hollow cavity structure comprises an internal truss structure.

6. A system according to any of the previous claims, whereby the hollow cavity structure (101) is filled with a fluidum at under- or overpressure.

7. A system according to any of the previous claims, wherein the system furthermore comprises a pressure sensor(103) connectable to the cavity structure (101) for sensing a pressure in the cavity structure (101) and/or wherein the system furthermore comprising a processing unit (104) adapted for receiving measurement signals representative of a physical parameter of the fully integrated hollow cavity structure and for processing said measurement signals for detecting whether or not wear or cracks have occurred in the object under study.

8. A system according to claim 7, the system comprising said processing unit,
- wherein the measurement signals are pressure induced signals and wherein the processing unit (104) is adapted for processing said pressure induced signals such as to detect pressure changes in the hollow cavity structure (101), and for deriving from said pressure changes whether or not wear or cracks have occurred in the object under study (102), and/or
- wherein the processing unit (104) is adapted for receiving data of acoustic emission signals from the hollow cavity structure or the object itself (101) and for deriving from said data whether or not wear or cracks have occurred in the object under study (102), and/or
- wherein the processing unit (104) is adapted for receiving ultrasonic wave data of ultrasonic waves passing over the surfaces of the hollow cavity structure (101) and for deriving from said ultrasonic wave data whether or not wear or cracks have occurred in the object under study.

9. A system according to any of the previous claims, wherein the cavities of the system comprise a liquid penetrant for visualizing wear or cracks using the naked eye and/or an imaging system.

10. A method for manufacturing an object (102) for which structural health monitoring is to be applied, the method comprising
- defining and obtaining information regarding a position, dimension, shape and orientation of a hollow cavity structure (101) in the object (102) taking into account the loading conditions and positions of a component, and
- creating the object or a part thereof integrally including the hollow cavity structure (101) by using additive manufacturing taking into account said information.

11. A method for performing structural health monitoring of an object under study, the method comprising:
- applying a pressure, different from the ambient pressure, on a hollow network structure (101) comprising one or more cavities obtained using additive manufacturing forming integrally part of the object under study and being sealed from its environment, and
- measuring a pressure induced signal to detect pressure changes in the hollow cavity structure (101) for deriving from said pressure changes whether or not wear or cracks have occurred in the object under study (102).

12. A method according to claim 11, the method comprising
- receiving data of acoustic emission signals from the hollow cavity structure or structure itself (101) and deriving from said data whether or not wear or cracks have occurred in the object under study (102), and/or
- receiving data of acoustic emission signals from the hollow cavity a structure or the structure itself (101) and deriving from said data of acoustic emission signals a location of a crack in the object under study (102), and/or
- receiving ultrasonic wave data of ultrasonic waves passing over the surfaces of the hollow cavity structure (101) and deriving from said ultrasonic wave data whether or not wear or cracks have occurred in the object under study.

13. A processing unit for use with a structural health monitoring system, the processing unit being adapted for
- receiving measurement signals representative of a physical parameter of the fully integrated three dimensional hollow cavity structure and
- for processing said measurement signals for detecting whether or not wear or cracks have occurred in the object under study.

14. A processing unit according to claim 13, wherein
- the measurement signals are pressure induced signals and wherein the processing unit (104) is furthermore adapted for processing said pressure induced signals such as to detect pressure changes in the hollow cavity structure (101), and for deriving from said pressure changes whether or not wear or cracks have occurred in the object under study (102), and/or
- the processing unit (104) is adapted for receiving data of acoustic emission signals from the hollow cavity structure (101) and for deriving from said data whether or not wear or cracks have occurred in the object under study (102), and/or
- the processing unit (104) is adapted for receiving ultrasonic wave data of ultrasonic waves passing over the surfaces of the hollow cavity structure (101) and for deriving from said ultrasonic wave data whether or not wear or cracks have occurred in the object under study.

15. A computer program product for performing, when executed on a processor, a method according to any of claims 10 to 12.
